# EUROPEAN PATENT APPLICATION

(11) **EP 4 668 851 A1**
(43) Date of publication of application: **24.12.2025**
(21) Application number: 23921715.1
(22) Date of filing: 14.02.2023
(51) Int. Cl.: H04W 36/00, H04W 36/36, H04W 36/30

(54) **COMMUNICATION METHOD AND APPARATUS, AND READABLE STORAGE MEDIUM**

(71) Applicant: Beijing Xiaomi Mobile Software Co., Ltd., Beijing 100085 (CN)
(72) Inventor: TAO, Xuhua, Beijing 100085 (CN)
(74) Representative: Stöckeler, Ferdinand
(86) International application number: PCT/CN2023/076022
(87) International publication number: WO 2024/168547

(57) **Abstract**

The present disclosure provides a communication method and apparatus, and a readable storage medium. The method comprises: sending configuration information to a user equipment, wherein the configuration information comprises a trigger event corresponding to a Layer 1 measurement result, and the trigger event is used for triggering conditional handover (CHO). In the method of the present disclosure, a network device sends configuration information to a user equipment so as to issue to the user equipment a trigger event corresponding to a Layer 1 measurement result, such that after receiving the configuration information, the user equipment can perform Layer 1 measurement according to the configuration information, thereby effectively reducing the measurement delay, and preventing the throughput and mobility performance of a communication system from being affected by excessively long handover delay.

## Description

### TECHNICAL FIELD

The disclosure relates to the field of wireless communication technologies, and in particular relates to a communication method, an apparatus and a readable storage medium.

### BACKGROUND

To reduce the interruption time of the user equipment (UE) handover, the 3rd generation partnership project (3GPP) has introduced the conditional handover (CHO). In the 5G new radio (NR) communication system, the UE performs a layer 3 (L3) measurement to execute the CHO based on signal qualities of the current serving cell and the candidate cell.

### SUMMARY

The disclosure provides a communication method, an apparatus and a readable storage medium.

According to a first aspect of embodiments of the disclosure, a communication method is provided, which is performed by a network device. The method includes:
sending configuration information to a UE, in which the configuration information comprises a trigger event corresponding to a layer 1 (L1) measurement result, and the trigger event is configured to trigger a CHO.

According to the method of the disclosure, the network device sends the configuration information to the UE to deliver the trigger event corresponding to the L1 measurement result to the UE. This enables the UE to perform the L1 measurement according to the configuration information after receiving the configuration information, effectively saving a measurement delay, so as to prevent an excessive handover delay from affecting a throughput and a mobility performance of a communication system.

In some embodiments, the trigger event comprises at least one of:
a first event, where the L1 measurement result of a candidate cell is better than the L1 measurement result of a primary cell (PCell) or of a primary secondary cell (PSCell); or
a second event, where the L1 measurement result of the PCell or of the PSCell is worse than a first threshold, and the L1 measurement result of the candidate cell is better than a second threshold.

In some embodiments, the configuration information further includes at least one of:
a candidate cell to be measured;
a handover priority of the candidate cell to be measured;
a threshold N of number of times; or
an L1 measurement parameter;
in which the handover priority indicates an order in which the UE performs a handover to the candidate cell, and the threshold of number of times indicates that the CHO is triggered in a case where a number of times the trigger event is satisfied is greater than or equal to the threshold N of number of times.

In some embodiments, the L1 measurement parameter includes at least one of:
an L1 reference signal received power (L1-RSRP); or
an L1 signal to interference plus noise ratio (L1-SINR).

In some embodiments, the method further includes:
receiving indication information sent by the UE, in which the indication information indicates that a cell handover is completed.

In some embodiments, receiving the indication information sent by the UE includes at least one of:
receiving downlink control information (DCI) sent by the UE, in which the DCI includes the indication information; or
receiving a medium access control control element (MAC-CE) signaling sent by the UE, in which the MAC-CE signaling includes the indication information.

In some embodiments, sending the configuration information to the UE includes:
sending a radio resource control (RRC) signaling to the UE, in which the RRC signaling includes the configuration information.

According to a second aspect of embodiments of the disclosure, a communication method is provided, and is performed by a UE. The method includes:
receiving configuration information sent by a network device, in which the configuration information includes a trigger event corresponding to an L1 measurement result, and the trigger event is configured to trigger a CHO.

According to the method of the disclosure, the UE receives the configuration information sent by the network device to know the trigger event corresponding to the L1 measurement result. This enables the UE to perform the L1 measurement according to the configuration information after receiving the configuration information, effectively saving the measurement delay, so as to prevent the excessive handover delay from affecting the throughput and the mobility performance of the communication system.

In some embodiments, the method includes:
performing, according to the configuration information, the CHO for handing over from a serving cell to a first candidate cell, in which the L1 measurement result of the first candidate cell satisfies the corresponding trigger event.

In some embodiments, performing, according to the configuration information, the CHO for handing from the serving cell to the first candidate cell includes:
performing, according to the configuration information, L1 measurements on a plurality of candidate cells to obtain corresponding L1 measurement results; and
in a case where the L1 measurement result of the first candidate cell satisfies the corresponding trigger event, performing the CHO for handing over from the serving cell to the first candidate cell.

In some embodiments, in a case where the L1 measurement result of at least one candidate cell satisfies the corresponding trigger event, the first candidate cell is a candidate cell with the highest handover priority among the at least one candidate cell or is a candidate cell selected by the UE.

In some embodiments, in the case where the L1 measurement result of the first candidate cell satisfies the corresponding trigger event, performing the CHO for handing over from the serving cell to the first candidate cell includes:
in a case where a number of times that the L1 measurement result of the first candidate cell satisfies the corresponding trigger event is greater than or equal to a times threshold N, performing the CHO for handing over from the serving cell to the first candidate cell.

In some embodiments, the configuration information further includes at least one of:
a candidate cell to be measured;
a handover priority of the candidate cell to be measured;
a threshold N of number of times; or
an L1 measurement parameter;
in which the handover priority indicates an order in which the UE performs a handover to the candidate cell, and the threshold of number of times indicates that the CHO is triggered in a case where a number of times the trigger event is satisfied is greater than or equal to the threshold N of number of times.

In some embodiments, the L1 measurement parameter includes at least one of:
an L1-RSRP; or
an L1-SINR.

In some embodiments, the method further includes:
in a case of completing a cell handover, sending indication information to the network device, in which the indication information indicates that the cell handover is completed.

In some embodiments, sending the indication information to the network device includes at least one of:
sending DCI to the network device, in which the DCI includes the indication information; or
sending a MAC-CE signaling to the network device, in which the MAC-CE signaling includes the indication information.

In some embodiments, receiving the configuration information sent by the network device includes:
receiving a RRC signaling sent by the network device, in which the RRC signaling includes the configuration information.

In some embodiments, the trigger event includes at least one of:
a first event, where the L1 measurement result of a candidate cell is better than the L1 measurement result of a PCell or of a PSCell; or
a second event, where the L1 measurement result of the PCell or of the PSCell is worse than a first threshold, and the L1 measurement result of the candidate cell is better than a second threshold.

According to a third aspect of embodiments of the disclosure, a first communication apparatus is provided. The first communication apparatus is configured to execute the steps performed by the network device in the above first aspect or any possible design of the first aspect. The first communication apparatus may implement each function in the above methods in the form of a hardware structure, a software module, or a combination of a hardware structure and a software module.

When the first communication apparatus in the third aspect is implemented by a software module, the first communication apparatus may include a transceiver module, which may be configured to support the first communication apparatus in communicating.

When executing the steps described in the above first aspect, the transceiver module is configured to send configuration information to a UE, in which the configuration information includes a trigger event corresponding to an L1 measurement result, and the trigger event is configured to trigger a CHO.

According to a fourth aspect of embodiments of the disclosure, a second communication apparatus is provided. The second communication apparatus is configured to execute the steps performed by the network device in the above second aspect or any possible design of the second aspect. The second communication apparatus may implement each function in the above methods in the form of a hardware structure, a software module, or a combination of a hardware structure and a software module.

When the second communication apparatus in the fourth aspect is implemented by a software module, the second communication apparatus may include a transceiver module, which may be configured to support the second communication apparatus in communicating.

When executing the steps described in the above second aspect, the transceiver module is configured to receive configuration information sent by a network device, in which the configuration information includes a trigger event corresponding to an L1 measurement result, and the trigger event is configured to trigger a CHO.

According to a fifth aspect of embodiments of the disclosure, a UE is provided. The UE includes a processor and a memory, in which the memory is configured to store a computer program, and the processor is configured to execute the computer program to implement the method according to the first aspect or any possible design of the first aspect.

According to a sixth aspect of embodiments of the disclosure, a network device is provided. The network device includes a processor and a memory, in which the memory is configured to store a computer program, and the processor is configured to execute the computer program to implement the method according to the second aspect or any possible design of the second aspect.

According to a seventh aspect of embodiments of the disclosure, a computer-readable storage medium is provided. The computer-readable storage medium stores instructions that, when invoked and executed on a computer, cause the computer to execute the method according to the first aspect or any possible design of the first aspect, or to execute the method according to the second aspect or any possible design of the second aspect.

It should be understood that the above general description and the following detailed description are merely exemplary and explanatory, and shall not limit the disclosure.

### BRIEF DESCRIPTION OF THE DRAWINGS

The drawings described herein are provided to facilitate a further understanding of embodiments of the disclosure and form a part of the disclosure. The schematic embodiments of the disclosure and their descriptions are used to explain the embodiments of the disclosure, and do not constitute an improper limitation on the embodiments of the disclosure.

The drawings herein are incorporated into and form a part of the specification, illustrate embodiments consistent with the embodiments of the disclosure, and together with the specification, serve to explain the principles of the embodiments of the disclosure.
FIG. 1 is an architecture schematic diagram of a wireless communication system according to an embodiment of the disclosure.
FIG. 2 is a flowchart of a communication method according to an embodiment.
FIG. 3 is a flowchart of a communication method according to another embodiment.
FIG. 4 is a flowchart of a communication method according to another embodiment.
FIG. 5 is a flowchart of a communication method according to another embodiment of the disclosure.
FIG. 6 is a flowchart of a communication method according to another embodiment.
FIG. 7 is an interaction diagram of a communication method according to an embodiment.
FIG. 8 is a block diagram of a communication apparatus according to an embodiment.
FIG. 9 is a block diagram of a network device according to an embodiment.
FIG. 10 is a block diagram of a communication apparatus according to an embodiment.
FIG. 11 is a block diagram of a UE according to an embodiment.

### DETAILED DESCRIPTION

Embodiments of the disclosure will be further described below with reference to the drawings and specific implementations.

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of the example embodiments do not represent all implementations consistent with the disclosure. Instead, they are merely examples of apparatuses and methods consistent with aspects related to the disclosure as recited in the attached claims.

The terms used in the disclosure are only for the purpose of describing specific embodiments, and are not intended to limit the disclosure. The singular forms of "a" and "the" used in the disclosure and attached claims are also intended to include plural forms, unless the context clearly indicates other meanings. It is understandable that the term "and/or" as used herein refers to and includes any or all possible combinations of one or more associated listed items.

It is understandable that although the terms "first", "second", and "third" may be used in the disclosure to describe various information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if" as used herein may be interpreted as "when", "while" or "in response to determining".

Embodiments of the disclosure are described in detail below, and examples of the embodiments are shown in the drawings, in which the same or similar reference numerals represent the same or similar elements throughout. Embodiments described below with reference to the drawings are exemplary and are intended to explain the disclosure, but should not be construed as a limitation to the disclosure.

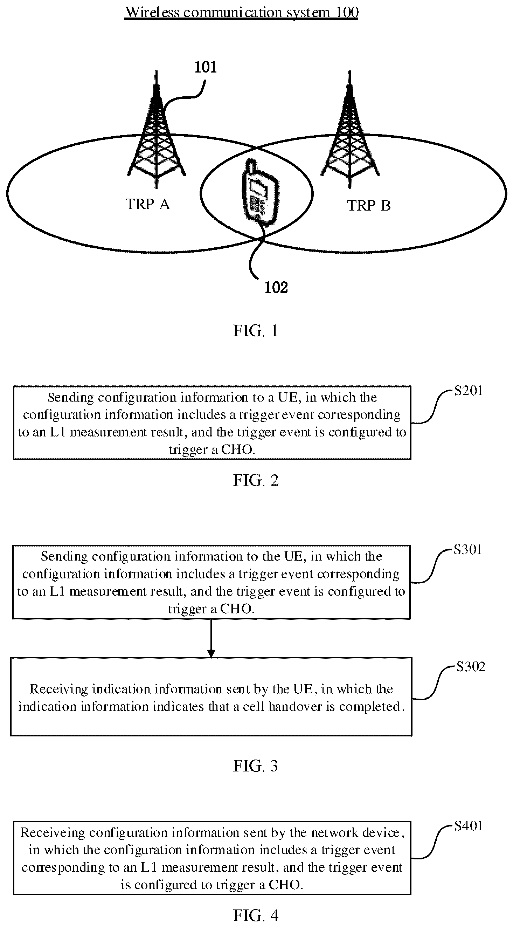

As shown in FIG. 1, a communication method provided by the embodiments of the disclosure may be applied to a wireless communication system 100, which may include a network device 101 and a UE 102. The UE 102 is configured to support carrier aggregation and may be connected to a plurality of carrier units of the network device 101, including one primary carrier unit and one or more secondary carrier units.

It should be understood that the above wireless communication system 100 is applicable to both low-frequency scenarios and high-frequency scenarios. The application scenarios of the wireless communication system 100 include, but are not limited to, a long term evolution (LTE) system, an LTE frequency division duplex (FDD) system, an LTE time division duplex (TDD) system, a worldwide interoperability for microwave access (WiMAX) communication system, a cloud radio access network (CRAN) system, a future 5th-generation (5G) system, an NR communication system, or a future evolved public land mobile network (PLMN) system, etc.

The UE 102 shown above may be a terminal, an access terminal, a terminal unit, a terminal station, a mobile station (MS), a remote station, a remote terminal, a mobile terminal, a wireless communication apparatus, a terminal agent, or a terminal device, etc. The UE 102 may have a wireless transmitting/receiving function, and be capable of communicating (such as wireless communication) with one or more network devices of one or more communication systems, and receiving network services provided by the network device. The network device here includes, but are not limited to, the network device 101 shown in the figure.

The UE 102 may be a cellular phone, a cordless phone, a session initiation protocol (SIP) phone, a wireless local loop (WLL) station, a personal digital assistant (PDA) device, a handheld device with a wireless communication function, a computing device or other processing devices connected to a wireless modem, a vehicle-mounted device, a wearable device, a terminal in a future 5G network, or a terminal in a future evolved PLMN network, etc.

The network device 101 may be an access network device (or access network site). The access network device refers to a device that provides network access functions, such as a radio access network (RAN) base station and the like. Specifically, the network device 101 may include a base station (BS), or include a base station and a wireless resource management device for controlling the base station, etc. The network device 101 may also include a relay station (relay device), an access point, a base station in a future 5G network, a base station in a future evolved PLMN network, or an NR base station, etc. The network device 101 may be a wearable device or a vehicle-mounted device. The network device 101 may also be a communication chip with a communication module.

For example, the network device 101 includes, but is not limited to: a next-generation base station (gnodeB, gNB) in 5G, an evolved node B (eNB) in the LTE system, a radio network controller (RNC), a node B (NB) in a wideband code division multiple access (WCDMA) system, a wireless controller under the CRAN system, a base station controller (BSC), a base transceiver station (BTS) in a global system for mobile communications (GSM) system or a code division multiple access (CDMA) system, a home base station (e.g., home evolved nodeB, or home node B, HNB), a baseband unit (BBU), a transmitting and receiving point (TRP), a transmitting point (TP), or a mobile switching center, etc.

It may be understood that subjects shown in FIG. 1, such as the network device 101 and the UE 102, are merely examples. For instance, embodiments of the disclosure do not limit the number of network devices 101 and UE 102, and there may be more network devices 101 and more UE 102 than those shown in the figure. In addition, examples or embodiments of the disclosure may include all or part of the subjects in FIG. 1, and may also include other subjects not shown in FIG. 1. The number of each subject is arbitrary and not limited to that in FIG. 1. The connection relationships shown in FIG. 1 are examples; any subjects may be unconnected or connected with each other, and may be connected in any manner, such as a direct connection or an indirect connection, a wired connection, or a wireless connection.

An embodiment of the disclosure provides a communication method, which is performed by the network device 101. Referring to FIG. 2, FIG. 2 is a flowchart of a communication method according to an embodiment, and the communication method shown in FIG. 2 is performed by the network device 101. As shown in FIG. 2, the method includes step S201.

At step S201, a network device 101 sends configuration information to a UE 102, in which the configuration information includes a trigger event corresponding to a layer 1 (L1) measurement result, and the trigger event is configured to trigger a conditional handover (CHO).

In some embodiments, in addition to a serving cell (or referred to as an active serving cell or a source cell) that the UE 102 currently accesses, the UE 102 may also be configured with a plurality of candidate cells (or referred to as candidate serving cell(s)). For example, the source cell includes a PCell or a PSCell.

Herein, the trigger event in the configuration information is configured for the UE 102 to evaluate qualities of the source cell and the candidate cells. For example, the UE 102 performs an L1 measurement on the candidate cell(s) according to the configuration information. When the L1 measurement result of a first candidate cell, i.e., a target candidate cell (or referred to as a target cell), meets the trigger event, the UE 102 will execute the CHO, that is, release the connection with the source cell and switch to connect with the first candidate cell.

In some embodiments, the network device 101 may be a network device corresponding to the source cell of the UE 102 (such as TRP A in FIG. 1 ), and a network device corresponding to the first candidate cell may be, for example, TRP B in FIG. 1.

In some embodiments, the trigger event includes at least one of :
a first event, where the L1 measurement result of a candidate cell is better than the L1 measurement result of PCell or of a PSCell; or
a second event, where the L1 measurement result of the PCell or of the PSCell is worse than a first threshold, and the L1 measurement result of the candidate cell is better than a second threshold.

In an example, a determination method of the first event may also refer to a conditional event A3 (CondEvent A3). It is worth noting that the L1 measurement result is determined in the first event, while an L3 measurement result is determined in the A3.

In an example, a determination method of the second event may also refer to a conditional event A5 (CondEvent A5). It is worth noting that the L1 measurement result is determined in the second event, while an L3 measurement result is determined in the A5.

The first threshold value is, for example, absolute threshold1 involved in the CondEvent A5, and the second threshold value is, for example, absolute threshold2 in the CondEvent A5.

It may be understood that different L1 measurement parameters may correspond to different first threshold values and second threshold values. The determination of the first event and the second event in this embodiment may be understood with reference to the descriptions of the following examples.

In some embodiments, the UE 102 may perform the L1 measurement(s) on the candidate cell(s) according to the configuration information, and obtain corresponding L1 measurement result(s).

In some embodiments, the configuration information further includes at least one of:
a candidate cell to be measured;
a handover priority of the candidate cell to be measured;
a threshold N of number of times; or
an L1 measurement parameter.

The handover priority indicates an order in which the UE performs a handover to the candidate cell, and the threshold N of number of times indicates that the CHO is triggered in a case where a number of times the trigger event is satisfied is greater than or equal to the threshold N of number of times.

In an example, a measuring object (MO) configured in the configuration information, i.e. the candidate cell to be measured, may be one or a plurality of candidate cells, where "a plurality" may refer to more than one.

In an example, N may be an integer greater than or equal to 1.

In an example, the UE 102 may perform a measurement on the candidate cell to be measured according to the candidate cell to be measured configured in the configuration information.

For example, the UE 102 receives a reference signal (RS) of the candidate cell to be measured, and measures the L1 measurement parameter of the received RS to obtain the L1 measurement result.

In an example, when the L1 measurement result of the first candidate cell satisfies the trigger event, the UE 102 may perform the CHO for handing over from the source cell to the first candidate cell.

In another example, when the L1 measurement results of a plurality of candidate cells all satisfy the corresponding trigger events, the UE 102 may perform the CHO according to the handover priority, and hand over from the source cell to the first candidate cell with the highest handover priority among the plurality of candidate cells.

In another example, when the number of times that the L1 measurement result of the first candidate cell satisfies the trigger event is greater than or equal to N, the UE 102 may perform the CHO according to the handover priority, and hand over from the source cell to the first candidate cell.

In some embodiments, one or more parameters in the configuration information may also be sent or indicated via other information.

For example, the network device 101 delivers the configuration information in a static or semi-static manner, in which the configuration information configures the trigger event, the candidate cell to be measured, and the L1 measurement parameter. Other information such as indication information is delivered in a dynamic manner, dynamically indicating at least one of the threshold N of number of times or the handover priority of the candidate cell to be measured.

In some embodiments, the L1 measurement parameter may be at least one of:
an L1-RSRP; or
an L1-SINR.

Alternatively, in other examples, the L1 measurement parameters may be at least one of:
an L1-RSRP;
an L1-SINR;
an L1 reference signal received quality (L1-RSRQ); or
an L1 received signal strength indicator (L1-RSSI).

In an example, taking the L1 measurement parameter including the L1-RSRP as an example, a larger L1-RSRP indicates a better L1 measurement result, that is, better channel quality.

In an example, taking the L1 measurement parameter including the L1-SINR as an example, a larger L1-SINR indicates a better L1 measurement result, that is, better channel quality.

In some embodiments, a method for determining that the L1 measurement result of the candidate cell satisfying the first event is described according to different L1 measurement parameters.

In an example, the L1 measurement result of the first candidate cell is better than the L1 measurement result of the PCell or of the PSCell. For example, when the L1-RSRP of the first candidate cell is greater than the L1-RSRP of the PCell or of the PSCell, it is determined that the L1 measurement result of the first candidate cell satisfies the first event.

In another example, the L1 measurement result of the first candidate cell is better than the L1 measurement result of the PCell or of the PSCell. For example, when the L1-SINR of the first candidate cell is greater than the L1-SINR of the PCell or of the PSCell, it is determined that the L1 measurement result of the first candidate cell satisfies the first event.

In some embodiments, a method for determining that the L1 measurement result of the candidate cell satisfies the second event is described according to different L1 measurement parameters.

In an example, taking the L1 measurement parameter including the L1-RSRP as an example, both the first threshold and the second threshold corresponding to the L1-RSRP are within a range of INTEGER (0~127), with values between -156dBm and -31dBm, and the second threshold is greater than the first threshold.

For example, in this example, the first threshold is set to -85dBm, and the second threshold is set to -80dBm. When the L1-RSRP of the source cell is less than -85dBm, and the L1-RSRP of the first candidate cell is greater than -80dBm, the L1 measurement result of the first candidate cell satisfies the second event.

It may be understood that in other examples, when the L1 measurement parameter is the L1-SINR, the first threshold and the second threshold corresponding to the L1-SINR are within the range of INTEGER (0~127), with values between -23dB and -40dB, and the second threshold is greater than the first threshold. When the L1 measurement parameter is the L1-RSRQ, the first threshold and the second threshold corresponding to the L1-RSRQ are within the range of INTEGER (0~127), with values between -40dB and 20dB, and the second threshold is greater than the first threshold. When the L1 measurement parameter is the L1-RSSI, the first threshold and the second threshold corresponding to the L1-RSSI are within the range of INTEGER (0~76), and the second threshold is greater than the first threshold. For the determination method, reference may be made to the description of the L1-RSRP example, and not all are listed here.

In some embodiments, after the UE 102 completes the measurement and handover according to the configuration information, the UE 102 may send indication information to the network device 101. For those embodiments, reference may be made to the embodiment corresponding to FIG. 3, and details will not be repeated here.

In some embodiments, the network device 101 may send the configuration information by sending a RRC signaling.

For example, step S201 in this method may adopt the following step S201'.

At step S201', the network device 101 sends a RRC signaling to the UE 102, in which the RRC signaling includes the configuration information.

In the embodiments of the disclosure, the network device 101 sends the configuration information to the UE 102 to deliver the trigger event corresponding to the L1 measurement result to the UE 102. This enables the UE 102 to perform the L1 measurement according to the configuration information after receiving the configuration information, effectively saving a measurement delay, so as to prevent an excessive handover delay from affecting a throughput and a mobility performance of the communication system.

It is worth noting that a cell coverage, especially in a communication scenario of a FR2 frequency band, is relatively small, and the excessive handover delay will affect the throughput and the mobility performance of the serving cell. Therefore, reducing of the handover delay in the embodiments of the disclosure is beneficial to ensure the throughput and mobility performance of the serving cell or the entire communication system.

An embodiment of the disclosure provides a communication method performed by the network device 101. Referring to FIG. 3, which is a flowchart of a communication method according to an embodiment, the method shown in FIG. 3 is performed by the network device 101. As shown in FIG. 3, the method includes steps S301 to S302.

At step S301, the network device 101 sends configuration information to the UE 102, in which the configuration information includes a trigger event corresponding to an L1 measurement result, and the trigger event is configured to trigger a CHO.

For the implementation of step S301, reference may be made to the implementation of step S201 in the embodiment of FIG. 2, and details will not be repeated here.

At step S302, the network device 101 receives indication information sent by the UE 102, in which the indication information indicates that a cell handover is completed.

In some embodiments, step S302 may adopt the following step S302'.

At step S302', the network device 101 receives DCI sent by the UE 102, in which the DCI includes the indication information.

For example, one or more bits in the DCI indicate whether the UE 102 has completed the cell handover. Taking one bit in the DCI as an example, when a value of the one bit is 1 or 0, it may indicate that the UE 102 has completed the cell handover.

In some embodiments, step S302 may adopt the following step S302".

At step S302", the network device 101 receives a MAC-CE signaling sent by the UE 102, in which the MAC-CE signaling includes the indication information.

For example, one or more bits in the MAC-CE signaling indicates whether the UE 102 has completed the cell handover. Taking one bit in the MAC-CE signaling as an example, when a value of the one bit is 1 or 0, it may indicate that the UE 102 has completed the cell handover.

In the embodiments of the disclosure, the UE 102 reports the indication information after the cell handover is completed, so that the network device 101 may timely know a state of the UE 102, facilitate timely scheduling, ensure a lower scheduling delay, and improve communication efficiency.

Embodiments of the disclosure provide a communication method performed by the UE 102. Referring to FIG. 4, which is a flowchart of a communication method according to an embodiment, the method shown in FIG. 4 is performed by the UE 102. As shown in FIG. 4, the method includes step S401.

At step S401, the UE 102 receives configuration information sent by the network device 101, in which the configuration information includes a trigger event corresponding to an L1 measurement result, and the trigger event is configured to trigger a CHO.

In some embodiments, the trigger event includes at least one of:
a first event, where the L1 measurement result of a candidate cell is better than the L1 measurement result of a PCell or of a PSCell; or
a second event, where the L1 measurement result of the PCell or of the PSCell is worse than a first threshold, and the L1 measurement result of the candidate cell is better than a second threshold.

In an example, the first threshold value is, for example, absolute threshold1 involved in the CondEvent A5, and the second threshold value is, for example, absolute threshold2 in the CondEvent A5.

It may be understood that different L1 measurement parameters may correspond to different first threshold values and second threshold values. For the implementation of this embodiment, reference may be made to the determination methods of the first event and the second event in the implementation of the above step S201.

In some embodiments, the UE 102 may perform the L1 measurement(s) on the candidate cell(s) according to the configuration information, and obtain corresponding L1 measurement result(s).

In some embodiments, the configuration information further includes at least one of:
a candidate cell to be measured;
a handover priority of the candidate cell to be measured;
a threshold N of number of times; or
an L1 measurement parameter.

The handover priority indicates an order in which the UE performs a handover to the candidate cell, and the threshold of number of times indicates that the CHO is triggered in a case where a number of times the trigger event is satisfied is greater than or equal to the threshold N of number of times.

In an example, a MO configured in the configuration information, i.e. the candidate cell to be measured, may be one or a plurality of candidate cells, where "a plurality" may refer to more than one.

In an example, the UE 102 may perform a measurement on the candidate cell to be measured according to the candidate cell to be measured configured in the configuration information. For example, the UE 102 receives a RS of the candidate cell to be measured, and measures the L1 measurement parameter of the received RS to obtain the L1 measurement result.

In some embodiments, one or more parameters in the configuration information may also be sent or indicated via other information. For example, the network device 101 delivers the configuration information in a static or semi-static manner, in which the configuration information configures the trigger event, the candidate cell to be measured, and the L1 measurement parameter. Other information such as indication information is delivered in a dynamic manner, dynamically indicating at least one of the threshold N of number of times or the handover priority of the candidate cell to be measured.

For other implementations of this embodiment, reference may also be made to the description of the above embodiments of the network device 101, and not all are described in detail here.

In some embodiments, the L1 measurement parameter may be at least one of:
an L1-RSRP; or
an L1-SINR.

A larger L1-RSRP indicates a better L1 measurement result, that is, better channel quality. Alternatively, a larger L1-SINR indicates a better L1 measurement result, that is, better channel quality. For other implementations of this embodiment, reference may also be made to the description of the above embodiments of the network device 101, and not all are described in detail here.

In some embodiments, the UE 102 may receive the configuration information sent by the network device 101 via a RRC signaling.

For example, step S401 in this method may adopt the following step S401'.

At step S401', the UE 102 receives a RRC signaling sent by the network device 101, in which the RRC signaling includes the configuration information.

In this embodiment of the disclosure, the UE receives the configuration information delivered by the network device to know the trigger event corresponding to the L1 measurement result. This enables the UE to perform the L1 measurement according to the configuration information after receiving the configuration information, effectively saving the measurement delay, so as to prevent the excessive handover delay from affecting the throughput and the mobility performance of the communication system.

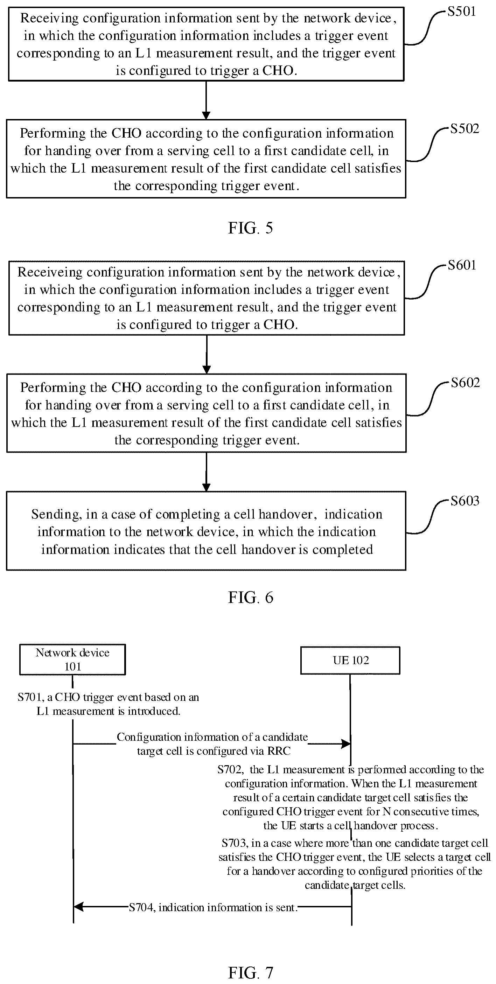

An embodiment of the disclosure provides a communication method performed by the UE 102. Referring to FIG. 5, which is a flowchart of a communication method according to an embodiment, the method shown in FIG. 5 is performed by the UE 102. As shown in FIG. 5, the method includes steps S501 to S502.

At step S501, the UE 102 receives configuration information sent by the network device 101, in which the configuration information includes a trigger event corresponding to an L1 measurement result, and the trigger event is configured to trigger a CHO.

For the implementation of step S501, reference may be made to the implementation of step S401, an details will not be repeated here.

At step S502, the UE 102 performs the CHO according to the configuration information for handing over from a serving cell to a first candidate cell, in which the L1 measurement result of the first candidate cell satisfies the corresponding trigger event.

In some embodiments, the UE 102 performs measurement(s) on candidate cell(s) to be measured according to the configuration information. When the L1 measurement result of the first candidate cell satisfies the trigger event, the UE 102 may perform the CHO for handing over from the source cell (i.e., the serving cell) to the first candidate cell.

In some embodiments, step S502 in the method may adopt the following steps S502-11 to S502-12.

At step S502-11, the UE 102 performs L1 measurements on a plurality of candidate cells according to the configuration information, and obtains corresponding L1 measurement results.

In some embodiments, according to the configuration information, the UE 102 may perform the measurement on each candidate cell to be measured respectively, and measure the L1 measurement parameter corresponding to the candidate cell to obtain the L1 measurement result of the candidate cell. This process continues until the L1 measurement results of all candidate cells to be measured are obtained.

At step S502-12, in a case where the L1 measurement result of the first candidate cell satisfies the corresponding trigger event, the CHO is performed, and the UE 102 hands over from the serving cell to the first candidate cell.

In some embodiments, the configuration information may configure the trigger event corresponding to each candidate cell. After obtaining the L1 measurement results of the plurality of candidate cells, the UE 102 respectively determines whether the L1 measurement result of each candidate cell satisfies the corresponding trigger event.

In some embodiments, the first candidate cell refers to a candidate cell whose L1 measurement result satisfies the corresponding trigger event.

For example, the trigger event corresponding to the first candidate cell is the first event. When the L1 measurement result of the first candidate cell is better than the L1 measurement result of the source cell, the first candidate cell satisfies the first event.

For another example, the trigger event corresponding to the first candidate cell is the second event. When the L1 measurement result of the first candidate cell is better than the second threshold, and the L1 measurement result of the source cell is worse than the first threshold, the first candidate cell satisfies the second event

In some embodiments, when the L1 measurement result of at least one candidate cell satisfies the corresponding trigger event, the first candidate cell is the one with the highest handover priority among the at least one candidate cell or is selected by the UE 102.

In an example, according to the configuration information, the UE 102 may know the handover priority of each candidate cell. When the L1 measurement results of a plurality of candidate cells all satisfy the corresponding trigger events, the UE 102 hands over to the candidate cell with the highest handover priority among them.

In another example, the L1 measurement results of the plurality of candidate cells candidate cells all satisfy the corresponding trigger events, and among them, there are two or more candidate cells with the same high handover priority. In this case, the UE 102 may select the first candidate cell based on its own implementation or requirements.

In some embodiments, step S502 in the method may adopt the following step S502-21.

At step S502-21, in a case where a number of times that the L1 measurement result of the first candidate cell satisfies the corresponding trigger event is greater than or equal to the threshold N of number of times, the UE 102 performs the CHO for handing over from the serving cell to the first candidate cell.

In an example, N may be an integer greater than or equal to 1.

In this embodiment, the threshold N of number of times needs to be met during the process of performing the CHO, so that a quality of the first candidate cell may be guaranteed to be optimal within a certain period of time, which prevents frequent handovers within a first period, reduces an interruption duration, and ensures a communication performance.

In the embodiments of the disclosure, the UE 102 performs the L1 measurement(s) on the candidate cell(s) according to the configuration information, and performs the CHO when the first candidate cell meets the trigger event. The measurement delay in the entire measurement process is low, which effectively improves the mobility performance. In addition, the UE 102 may determine a suitable first candidate cell via the configuration of handover priorities. Frequent handovers of the UE 102 in a short period of time may be reduced via the configuration of the threshold N of number of times, which is beneficial to the communication performance.

Embodiments of the disclosure provide a communication method performed by the UE 102. Referring to FIG. 6, which is a flowchart of a communication method according to an embodiment, the method shown in FIG. 6 is performed by the UE 102. As shown in FIG. 6, the method includes steps S601 to S603.

At step S601, the UE 102 receives configuration information sent by the network device 101, in which the configuration information includes a trigger event corresponding to an L1 measurement result, and the trigger event is configured to trigger a CHO.

For the implementation of step S601, reference may be made to the implementation of step S401 in the embodiment corresponding to FIG. 4, and details will not be repeated here.

At step S602, the UE 102 performs the CHO according to the configuration information for handing over from a serving cell to a first candidate cell, in which the L1 measurement result of the first candidate cell satisfies the corresponding trigger event.

For the implementation of step S602, reference may be made to the implementation of step S502 in the embodiment corresponding to FIG. 5, and details will not be repeated here.

At step S603, in a case of completing a cell handover, the UE 102 sends indication information to the network device 101, in which the indication information indicates that the cell handover is completed.

In some embodiments, step S603 may adopt the following step S603'.

At step S603', the UE 102 sends DCI to the network device 101, in which the DCI includes the indication information.

For example, one or more bits in the DCI indicate whether the UE 102 has completed the cell handover. Taking one bit in the DCI as an example, when a value of the one bit is 1 or 0, it may indicate that the UE 102 has completed the cell handover.

In some embodiments, step S603 may adopt the following step S603".

At step S603", the UE 102 sends a MAC-CE signaling to the network device 101, in which the MAC-CE signaling includes the indication information.

For example, one or more bits in the MAC-CE signaling indicates whether the UE 102 has completed the cell handover. Taking one bit in the MAC-CE signaling as an example, when a value of the one bit is 1 or 0, it may indicate that the UE 102 has completed the cell handover.

In the embodiments of the disclosure, the UE 102 reports the indication information after the cell handover is completed, so that the network device 101 may timely know a state of the UE 102, facilitate timely scheduling, ensure a lower scheduling delay, and improve communication efficiency.

To facilitate understanding of embodiments of the disclosure, some specific examples are listed below. Referring to FIG. 7, the method of this example may include one, part, or all of the following steps S701 to S704.

For ease of description, the steps are explained in the form of steps, and the actual order does not necessarily completely follow the described sequence.

At step S701, a CHO trigger event based on an L1 measurement is introduced.

For example, the CHO trigger event based on the L1 measurement may include at least one of:
L1_CondEvent, where based on the L1 measurement result, a signal condition of a candidate cell is better than a signal condition of a PCell/PSCell; or
L1_CondEvent, where based on the L1 measurement result, the signal quality of the PCell/PSCell is worse than an absolute threshold (Thres1) and the signal quality of the candidate cell is better than an absolute threshold (Thres2).

The L1 measurement includes at least one of an L1-RSRP measurement or an L1-SINR measurement.

At step S702, a serving cell configures configuration information of a candidate target cell via RRC. The UE performs the L1 measurement according to the configuration information. When the L1 measurement result of a certain candidate target cell satisfies the configured CHO trigger event for N consecutive times, the UE starts a cell handover process, where N is a configurable integer greater than or equal to 1.

At step S703, in a case where more than one candidate target cell in step S702 satisfies the CHO trigger event, the UE selects a target cell for a handover according to configured priorities of the candidate target cells. In a case where the priorities are the same, the target cell is selected according to an implementation of the UE.

At step S704, in a case where the UE completes the handover to the target cell, the UE sends handover completion indication information to the serving cell via DCI or MAC-CE.

For implementations of each step in this example, reference may be made to the description of the relevant steps in the above embodiments, and details will not be repeated here.

The above steps are to clearly illustrate the flow of the embodiments of the disclosure. In some embodiments, some of the steps may be executed, or executed in a different order from the above illustration.

For example, steps S703 and S704 above are optional, and may not be executed. In addition, the execution order is not limited in this embodiment. For example, step S701 may be configured in the configuration information of S702.

In the embodiments of the disclosure, the network device 101 sends the configuration information to the UE 102 to deliver the trigger event corresponding to the L1 measurement result to the UE 102. This enables the UE 102 to perform the L1 measurement according to the configuration information after receiving the configuration information, effectively saving a measurement delay, so as to prevent an excessive handover delay from affecting a throughput and a mobility performance of the communication system.

The examples or embodiments of the disclosure are not exhaustive, and are merely illustrative of some examples or embodiments, and are not intended to specifically limit the protection scope of the disclosure. In the case of no contradiction, each step in a certain example or embodiment may be implemented as an independent embodiment, and the steps may be combined arbitrarily. For example, a solution after removing some steps in a certain example or embodiment may also be implemented as an independent embodiment, and the order of each step in a certain example or embodiment may be exchanged arbitrarily. In addition, optional modes or optional examples in a certain example or embodiment may be combined arbitrarily. Furthermore, various examples or embodiments may be combined arbitrarily. For example, some or all steps of different examples or embodiments may be combined arbitrarily, and a certain example or embodiment may be combined arbitrarily with optional modes or optional examples of other examples or embodiments.

In some examples or embodiments, "in response to...", "in the case of...", "when...", "at the time of...", "if...", "assuming..." in the disclosure may be replaced with each other.

In some examples or embodiments, the descriptions in the disclosure such as "A or B", "A and/or B", "at least one of A or B", "A in one case, B in another case", "in response to one case A, in response to another case B" may include at least one of the following technical solutions depending on a situation: executing A independently of B, that is, A in some examples or embodiments; executing B independently of A, that is, B in some examples or embodiments; selectively executing A and B, that is, selecting from A and B to execute in some examples or embodiments; executing both A and B, that is, A and B in some examples or embodiments.

In some examples or embodiments, "including A", "containing A", "indicate A" and "carrying A" in the disclosure may be interpreted as directly carrying A, or as indirectly indicating A.

In addition, each element, each row, or each column in the tables involved in the disclosure may be implemented as an independent embodiment, and any combination of any elements, any rows, and any columns may also be implemented as an independent embodiment.

Based on the same concept as the above method embodiments, the embodiments of the disclosure also provide a first communication apparatus, which may have the functions of the network device 101 in the above method embodiments and may be configured to execute the steps performed by the network device 101 provided in the above method embodiments. This function may be implemented by hardware, or by software or hardware executing corresponding software. The hardware or software includes one or more modules corresponding to the above functions.

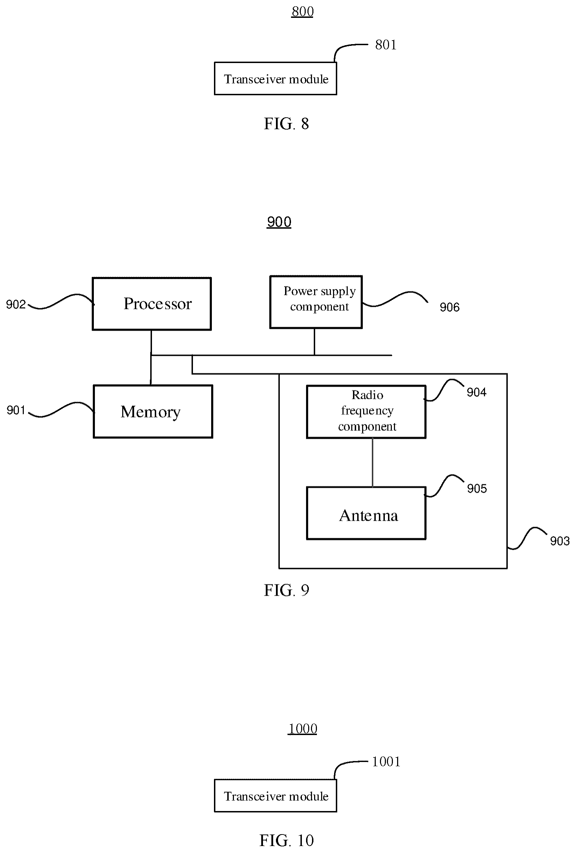

In an embodiment, an apparatus 800 as shown in FIG. 8 may serve as the network device 101 involved in the above method embodiments and execute the steps performed by the network device 101 in the above method embodiments. As shown in FIG. 8, the apparatus 800 may include a transceiver module 801, where the transceiver module 801 may be configured to support the communication apparatus in communicating.

When executing the steps implemented by the network device 101, the transceiver module 801 is configured to send configuration information to a UE, in which the configuration information includes a trigger event corresponding to an L1 measurement result, and the trigger event is configured to trigger a CHO.

When the communication apparatus is the network device 101, its structure can also be as shown in FIG. 9. The structure of the communication apparatus is illustrated by taking a base station as an example. As shown in FIG. 9, the apparatus 900 includes a memory 901, a processor 902, a transceiver component 903, and a power component 906. The memory 901 is coupled with the processor 902 and may be configured to store programs and data necessary for the communication apparatus 900 to realize various functions. The processor 902 is configured to support the communication apparatus 900 in executing corresponding functions in the above methods, and the functions may be realized by calling the programs stored in the memory 901. The transceiver component 903 may be a wireless transceiver, which may be configured to support the communication apparatus 900 in receiving signaling and/or data and sending signaling and/or data via a wireless air interface. The transceiver component 903 may also be called a transceiver unit or a communication unit. The transceiver component 903 may include a radio frequency component 904 and one or more antennas 905, where the radio frequency component 904 may be a remote radio unit (RRU), and specifically may be configured for transmitting radio frequency signals and converting between radio frequency signals and baseband signals, and the one or more antennas 905 may specifically be configured for radiating and receiving radio frequency signals.

When the communication apparatus 900 needs to send data, the processor 902 may perform a baseband processing on the data to be sent, then output a baseband signal to a radio frequency unit. The radio frequency unit performs radio a frequency processing on the baseband signal and then sends the radio frequency signal in the form of electromagnetic waves via the antenna. When data is sent to the communication apparatus 900, the radio frequency unit receives the radio frequency signal via the antenna, converts the radio frequency signal into a baseband signal, and outputs the baseband signal to the processor 902. The processor 902 converts the baseband signal into data and processes the data.

Based on the same concept as the above method embodiments, the embodiments of the disclosure also provide a second communication apparatus, which may have the functions of the UE 102 in the above method embodiments and may be configured to execute the steps performed by the UE 102 provided in the above method embodiments. This function may be implemented by hardware, or by software or hardware executing corresponding software. The hardware or software includes one or more modules corresponding to the above functions.

In an embodiment, an apparatus 1000 as shown in FIG. 10 may serve as the UE 102 involved in the above method embodiments and execute the steps performed by the UE 102 in the above method embodiments. As shown in FIG. 10, the apparatus 1000 may include a transceiver module 1001, where the transceiver module 1001 may be configured to support the communication apparatus in communicating.

When executing the steps implemented by the UE 102, the transceiver module 1001 is configured to receive configuration information sent by a network device, in which the configuration information comprises a trigger event corresponding to an L1 measurement result, and the trigger event is configured to trigger a CHO.

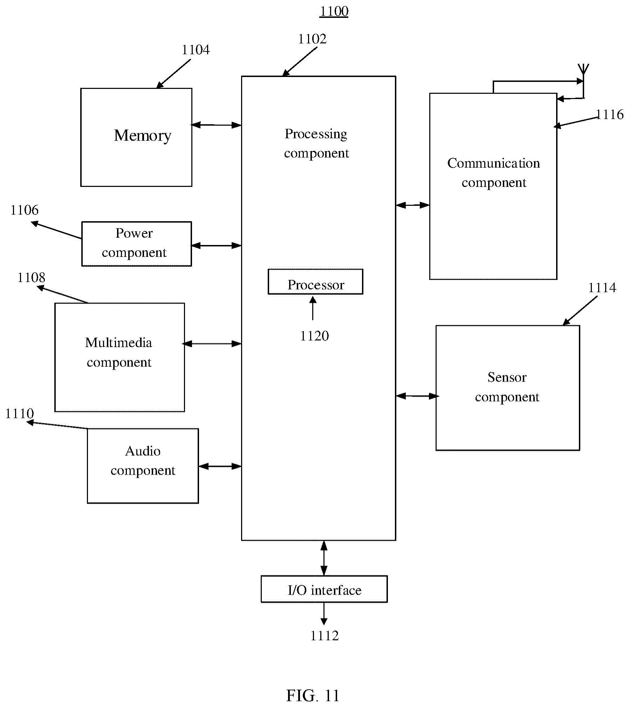

When the apparatus that receives the configuration information is the UE 102, its structure may also be as shown in FIG. 11. An apparatus 1100 may be a mobile phone, a computer, a digital broadcasting terminal, a message receiving and sending device, a game console, a tablet device, a medical device, a fitness device, a personal digital assistant, and the like.

Referring to FIG. 11, the apparatus 1100 may include one or more of the following components: a processing component 1102, a memory 1104, a power component 1106, a multimedia component 1108, an audio component 1110, an input/output (I/O) interface 1112, a sensor component 1114, and a communication component 1116.

The processing component 1102 typically controls overall operations of the apparatus 2000, such as the operations associated with display, telephone calls, data communications, camera operations, and recording operations. The processing component 1102 may include one or more processors 1120 to perform all or part of the steps in the above described methods. Moreover, the processing component 1102 may include one or more modules which facilitate the interaction between the processing component 1102 and other components. For example, the processing component 1102 may include a multimedia module to facilitate the interaction between the multimedia component 1108 and the processing component 1102.

The memory 1104 is configured to store various types of data to support the operation of the apparatus 1100. Examples of such data include instructions for any applications or methods operated on the apparatus 1100, contact data, phonebook data, messages, pictures, video, etc. The memory 1104 may be implemented using any type of volatile or non-volatile memory devices, or a combination thereof, such as a static random-access memory (SRAM), an electrically-erasable programmable read only memory (EEPROM), an erasable programmable read only memory (EPROM), a programmable read only memory (PROM), a read only memory (ROM), a magnetic memory, a flash memory, a magnetic or optical disk.

The power component 1106 provides power to various components of the apparatus 1100. The power component 1106 may include a power management system, one or more power sources, and any other components associated with the generation, management, and distribution of power in the apparatus 1100.

The multimedia component 1108 includes a touch screen providing an output interface between the apparatus 1100 and the user. In some embodiments, the screen may include a liquid crystal display (LCD) and a touch panel (TP). The touch panel includes one or more touch sensors to sense touches, swipes, and gestures on the touch panel. The touch sensor may not only sense a boundary of a touch or swipe action, but also sense a period of wakeup time and a pressure associated with the touch or swipe action. In some embodiments, the multimedia component 1108 includes a front-facing camera and/or a rear-facing camera. When the apparatus 1100 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 1110 is configured to output and/or input audio signals. For example, the audio component 1110 includes a microphone (MIC) configured to receive an external audio signal when the apparatus 1100 is in an operation mode, such as a call mode, a recording mode, and a voice recognition mode. The received audio signal may be further stored in the memory 1104 or transmitted via the communication component 1116. In some embodiments, the audio component 1110 further includes a speaker to output audio signals.

The I/O interface 1112 provides an interface between the processing component 1102 and peripheral interface modules, such as a keyboard, a click wheel, buttons, and the like. The buttons may include, but are not limited to, a home button, a volume button, a starting button, and a locking button.

The sensor component 1114 includes one or more sensors to provide status assessments of various aspects of the apparatus 1100. For instance, the sensor component 1114 may detect an open/closed status of the apparatus 1100, relative positioning of components, e.g., the display and the keypad, of the apparatus 1100, a change in position of the apparatus 1100 or a component of the apparatus 1100, a presence or absence of user contact with the apparatus 1100, an orientation or an acceleration/deceleration of the apparatus 1100, and a change in temperature of the apparatus 1100. The sensor component 1114 may include a proximity sensor configured to detect the presence of nearby objects without any physical contact. The sensor component 1114 may also include a light sensor, such as a complementary metal oxide semiconductor (CMOS) or charge-coupled device (CCD) image sensor, for use in imaging applications. In some embodiments, the sensor component 1114 may also include an accelerometer sensor, a gyroscope sensor, a magnetic sensor, a pressure sensor, or a temperature sensor.

The communication component 1116 is configured to facilitate communication, wired or wirelessly, between the apparatus 1100 and other devices. The apparatus 1100 may access a wireless network based on a communication standard, such as Wi-Fi, 2G or 3G, or a combination thereof. In an exemplary embodiment, the communication component 1116 receives a broadcast signal or broadcast associated information from an external broadcast management system via a broadcast channel. In an exemplary embodiment, the communication component 1116 further includes a near field communication (NFC) module to facilitate short-range communication. For example, the NFC module may be implemented based on a radio frequency identification (RFID) technology, an infrared data association (IrDA) technology, an ultra-wide band (UWB) technology, a blue tooth (BT) technology, and other technologies.

In some exemplary embodiments, the apparatus 1100 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors or other electronic components, for performing the above described methods.

In an embodiment, there is also provided a non-transitory computer-readable storage medium containing instructions, such as the memory 1104 including instructions, where the above-mentioned instructions may be executed by the processor 1120 of the apparatus 1100 to implement the above-mentioned method. For example, the storage medium may be a read-only memory (ROM), a random access memory (RAM), compact disc-ROM (CD-ROM), a magnetic tape, a floppy disk, an optical data storage device, etc.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples are considered as illustrative only, with a true scope and spirit of the disclosure being indicated by the following claims.

It should be understood that the embodiments of the disclosure are not limited to the precise structures that have been described above and shown in the accompanying drawings, and various modifications and changes may be made without departing from their scope. The scope of the embodiments of the disclosure is limited only by the appended claims.

### Industrial Applicability

According to the method of the disclosure, the network device sends the configuration information to the UE to deliver the trigger event corresponding to the L1 measurement result to the UE. This enables the UE to perform the L1 measurement according to the configuration information after receiving the configuration information, effectively saving the measurement delay, so as to prevent the excessive handover delay from affecting the throughput and the mobility performance of the communication system.

## Claims

1. A communication method, performed by a network device, comprising:
sending configuration information to a user equipment (UE), wherein the configuration information comprises a trigger event corresponding to a layer 1 (L1) measurement result, and the trigger event is configured to trigger a conditional handover (CHO).

2. The communication method according to claim 1, wherein the trigger event comprises at least one of:
a first event, where the L1 measurement result of a candidate cell is better than the L1 measurement result of a primary cell (PCell) or of a primary secondary cell (PSCell); or
a second event, where the L1 measurement result of the PCell or of the PSCell is worse than a first threshold, and the L1 measurement result of the candidate cell is better than a second threshold.

3. The communication method according to claim 1 or 2, wherein the configuration information further comprises at least one of:
a candidate cell to be measured;
a handover priority of the candidate cell to be measured;
a threshold N of number of times; or
an L1 measurement parameter;
wherein the handover priority indicates an order in which the UE performs a handover to the candidate cell, and the threshold of number of times indicates that the CHO is triggered in a case where a number of times the trigger event is satisfied is greater than or equal to the threshold N of number of times.

4. The communication method according to claim 3, wherein the L1 measurement parameter comprises at least one of:
an L1 reference signal received power (L1-RSRP); or
an L1 signal to interference plus noise ratio (L1-SINR).

5. The communication method according to any one of claims 1 to 4, further comprising:
receiving indication information sent by the UE, wherein the indication information indicates that a cell handover is completed.

6. The communication method according to claim 5, wherein receiving the indication information sent by the UE comprises at least one of:
receiving downlink control information (DCI) sent by the UE, wherein the DCI comprises the indication information; or
receiving a medium access control control element (MAC-CE) signaling sent by the UE, wherein the MAC-CE signaling comprises the indication information.

7. The communication method according to any one of claims 1 to 6, wherein sending the configuration information to the UE comprises:
sending a radio resource control (RRC) signaling to the UE, wherein the RRC signaling comprises the configuration information.

8. A communication method, performed by a user equipment (UE), comprising:
receiving configuration information sent by a network device, wherein the configuration information comprises a trigger event corresponding to a layer 1 (L1) measurement result, and the trigger event is configured to trigger a conditional handover (CHO).

9. The communication method according to claim 8, further comprising:
performing, according to the configuration information, the CHO for handing over from a serving cell to a first candidate cell, wherein the L1 measurement result of the first candidate cell satisfies the corresponding trigger event.

10. The communication method according to claim 9, wherein performing, according to the configuration information, the CHO for handing from the serving cell to the first candidate cell comprises:
performing, according to the configuration information, L1 measurements on a plurality of candidate cells to obtain corresponding L1 measurement results; and
in a case where the L1 measurement result of the first candidate cell satisfies the corresponding trigger event, performing the CHO for handing over from the serving cell to the first candidate cell.

11. The communication method according to claim 10, wherein in a case where the L1 measurement result of at least one candidate cell satisfies the corresponding trigger event, the first candidate cell is a candidate cell with the highest handover priority among the at least one candidate cell or is a candidate cell selected by the UE.

12. The communication method according to claim 10 or 11, wherein in the case where the L1 measurement result of the first candidate cell satisfies the corresponding trigger event, performing the CHO for handing over from the serving cell to the first candidate cell comprises:
in a case where a number of times that the L1 measurement result of the first candidate cell satisfies the corresponding trigger event is greater than or equal to a times threshold N, performing the CHO for handing over from the serving cell to the first candidate cell.

13. The communication method according to claims 8 to 12, wherein the configuration information further comprises at least one of:
a candidate cell to be measured;
a handover priority of the candidate cell to be measured;
a threshold N of number of times; or
an L1 measurement parameter;
wherein the handover priority indicates an order in which the UE performs a handover to the candidate cell, and the threshold of number of times indicates that the CHO is triggered in a case where a number of times the trigger event is satisfied is greater than or equal to the threshold N of number of times.

14. The communication method according to claim 13, wherein the L1 measurement parameter comprises at least one of:
an L1 reference signal received power (L1-RSRP); or
an L1 signal to interference plus noise ratio (L1-SINR).

15. The communication method according to any one of claims 9 to 14, wherein the method further comprises:
in a case of completing a cell handover, sending indication information to the network device, wherein the indication information indicates that the cell handover is completed.

16. The communication method according to claim 15, wherein sending the indication information to the network device comprises at least one of:
sending downlink control information (DCI) to the network device, wherein the DCI comprises the indication information; or
sending a medium access control control element (MAC-CE) signaling to the network device, wherein the MAC-CE signaling comprises the indication information.

17. The communication method according to any one of claims 8 to 16, wherein receiving the configuration information sent by the network device comprises:
receiving a radio resource control (RRC) signaling sent by the network device, wherein the RRC signaling comprises the configuration information.

18. The communication method according to any one of claims 8 to 17, wherein the trigger event comprises at least one of:
a first event, where the L1 measurement result of a candidate cell is better than the L1 measurement result of a primary cell (PCell) or of a primary secondary cell (PSCell); or
a second event, where the L1 measurement result of the PCell or of the PSCell is worse than a first threshold, and the L1 measurement result of the candidate cell is better than a second threshold.

19. A first communication apparatus, comprising:
a transceiver module, configured to send configuration information to a UE, wherein the configuration information comprises a trigger event corresponding to an L1 measurement result, and the trigger event is configured to trigger a CHO.

20. A second communication apparatus, comprising:
a transceiver module, configured to receive configuration information sent by a network device, wherein the configuration information comprises a trigger event corresponding to an L1 measurement result, and the trigger event is configured to trigger a CHO.

21. A user equipment (UE), comprising:
a memory configured to store a computer program; and
a processor configured to execute the computer program to implement the method according to any one of claims 1 to 7.

22. A network device, comprising:
a memory configured to store a computer program; and
a processor configured to execute the computer program to implement the method according to any one of claims 8 to 18.

23. A computer-readable storage medium, storing instructions that, when invoked and executed on a computer, cause the computer to execute the method according to any one of claims 1 to 7, or the method according to any one of claims 8 to 18.
